# EUROPÄISCHE PATENTSCHRIFT

(11) **EP 1 466 684 B1**
(45) Veröffentlichungstag und Bekanntmachung des Hinweises auf die Patenterteilung: **08.06.2011**
(21) Anmeldenummer: 04008695.1
(22) Anmeldetag: 10.04.2004
(51) Int. Cl.: B23B 5/18, B23C 3/06

(54) **Maschine zur Bearbeitung von Werkstücken, insbesondere von Kurbel- und Nockenwellen, mit mindestens einem Innen-Rundfräswerkzeug**
Equipment for machining of workpieces, particularly of crankshafts and camshafts, with at least one internal milling tool
Machine-outil pour l'usinage des pièces, en particulier des vilebrequins et des arbres à cames, avec au moins un outil pour le fraisage intérieur

(30) Priorität: 11.04.2003 DE 10317318
(43) Veröffentlichungstag der Anmeldung: 13.10.2004
(73) Patentinhaber: Gebr. Heller Maschinenfabrik GmbH, D-72622 Nürtingen (DE)
(72) Erfinder: Hemming, Christoph, 72829 Engstingen (DE); Bonfert, Heinrich, 72581 Dettingen (DE); Märker, Wolfgang, 72636 Linsenhofen (DE)
(74) Vertreter: Kohl, Karl-Heinz

(56) Entgegenhaltungen:
- DE-A- 10 035 718
- US-A- 4 171 654
- US-A- 5 078 556
- US-B1- 6 233 810

## Beschreibung

Die Erfindung betrifft eine Maschine zur Bearbeitung von Werkstücken, insbesondere von Kurbel- und Nockenwellen, nach dem Oberbegriff des Anspruches 1, welche z.B. aus US-A-5078556 bekannt ist.

Die Bearbeitung von Kurbelwellen stellt hohe Anforderungen an die Bearbeitungsmaschinen, an die Werkzeuge und Schneidstoffe sowie an die Bearbeitungsverfahren. Die Kurbelwellen sind aufgrund ihrer Länge und ihrer komplizierten Form sehr labil. Dabei müssen die verschiedenen Flächen der Kurbelwelle mit einer hohen Genauigkeit bearbeitet werden. Die beim Fräsen auftretenden Bearbeitungskräfte verformen das Werkstück, wodurch Maßungenauigkeiten entstehen.

Die Bearbeitung von Kurbelwellen erfolgt beispielsweise auf Innen-Rundfräsmaschinen. Bearbeitet werden die auf der Werkstückachse liegenden kreiszylindrischen Hauptlager, gegebenenfalls mit den angrenzenden Wangenflächen, sowie die zur Werkstückachse exzentrisch liegenden kreiszylindrischen Hublager.

Aus der US 4 171 654 ist eine Innen-Rundfräsmaschine bekannt, bei der eine Kurbelwelle an beiden Enden jeweils in Spannstöcken mit drehfesten Spannfuttern gespannt wird. Die kreiszylindrische Form der Hub- und Hauptlager wird durch eine kreisförmige Orbitalbewegung des Innenfräsers erreicht, was durch Achsinterpolation einer horizontalen und einer vertikalen Achse des Fräskopfes erreicht wird. Die Fräseinheit ist in Richtung der Werkstückachse nicht beweglich. Zur Bearbeitung der einzelnen Lagerstellen werden die Spannstöcke längs Führungsbahnen in die entsprechende axiale Position verfahren. Die gleichzeitige Bearbeitung mehrerer Lagerstellen ist bei diesem Maschinenkonzept aufgrund der nur einen Fräseinheit nicht möglich. Das Maschinenkonzept mit in Z-Richtung feststehenden Fräsköpfen ermöglicht nicht die gleichzeitige Bearbeitung von zwei Lagerstellen, weil es hierzu notwendig wäre, den axialen Abstand der Fräsköpfe zu verändern.

Aus der US 4 305 689 ist eine Innen-Rundfräsmaschine bekannt, die längs eines Führungssystems in Richtung der Werkstückachse verschiebliche Spannstöcke mit Spannfuttern aufweist. Die Enden der Kurbelwellen werden in Spannfuttern eingespannt. Sie sind um eine numerisch gesteuerte Spannfutterachse drehbeweglich. Der den Innenfräser aufnehmende Fräskopf ist zwischen den Spannstöcken vorgesehen und längs derselben Führungsbahn, auf der auch die Spannstöcke geführt sind, in Richtung der Werkstückachse verschiebbar. Der Innenfräser ist im Fräskopf zusätzlich entlang einer vertikal angeordneten Achse beweglich. Die Erzeugung der kreiszylindrischen Form der Hub- und Hauptlager erfolgt durch eine rotatorische Bewegung des Werkstückes (C-Achse) und gleichzeitiger Bewegung des Innenfräsers längs seiner vertikalen Achse durch Achsinterpolation. Bedingt durch den geringen Bauraum zwischen den Spannstöcken muß die Führungsbasis der Fräseinheit in Führungsrichtung kurz gehalten werden. Seine Verdrehund Kippsteifigkeit wird dadurch erheblich verringert, was sich negativ auf die Bearbeitungsgenauigkeit, die Zerspanleistung, die Werkzeugstandzeit und die Oberflächengüte auswirkt. Ebenso wird die Auskraglänge des Spannstockes aufgrund des begrenzten Bauraumes sehr groß, was zu weiteren Reduzierungen bei der Steifigkeit führt. Bei derartigen Maschinenkonzepten gestaltet sich auch die Anbringung von Führungsbahnabdeckungen schwierig. Sie müßten zwischen den beiden Fräseinheiten und jeweils zwischen den Fräseinheiten und den Spannstöcken vorgesehen werden. Die Abstände zwischen diesen Baugruppen betragen, abhängig von der axialen Bearbeitungsstellung, im Extremfall nur wenige Millimeter, so daß eine Führungsbahnabdeckung konstruktiv nicht eingebaut werden kann. Die Situation wird noch ungünstiger, wenn zusätzlich eine Lünette eingesetzt wird, die ebenfalls auf der einen Führungsbahn geführt wird. Gerade bei der Großserienfertigung von Kurbelwellen ist aber eine Führungsbahnabdeckung äußerst wichtig. Ein Fehlen dieses Bauelementes führt zu Maschinenstörungen und somit zu teueren Maschinenstillständen. Außerdem bewirken die herabfallenden Späne bei fehlender Führungsbahnabdeckung eine Erwärmung der Führungsbahnen und als Folge hiervon Maßungenauigkeiten. Für eine Präzisionsbearbeitung eignet sich dieses Maschinenkonzept somit nicht. Bei fehlender Führungsbahnabdeckung können wälzgelagerte Linearführungen nicht eingesetzt werden, weil sie sehr empfindlich sind gegen Schmutzpartikel oder Späne. Dringen die Partikel in die Führungsschuhe ein, führt dies in sehr kurzer Zeit zu starkem Verschleiß bis hin zu vollständiger Zerstörung.

Aus der WO 96/40462 ist eine Innen-Rundfräsmaschine bekannt, bei der eine Kurbelwelle an beiden Enden jeweils in Spannstöcken mit drehfesten Spannfuttern gespannt wird. Zusätzlich ist eine Abstützung der Kurbelwelle mittels einer Lünette vorgesehen. Die Erzeugung der kreiszylindrischen Form der Hub- und Hauptlager erfolgt durch eine Orbitalbewegung des Fräskopfes. Sie wird durch Anlenkung der um zwei Schwenkpunkte drehbar gelagerten Fräseinheit mittels zweier in unterschiedlichen Richtungen wirkenden Linear-Aktuatoren erzeugt. Die erforderliche Achsinterpolation unterliegt einem komplizierten Bewegungsgesetz. Der konstruktiv bedingte große Überhang des Innen-Rundfräsers sowie die Lagerung über zwei Drehpunkte erfordert zur Erzielung einer ausreichenden Massensteifigkeit eine massive, schwere Konstruktion. Zur Erzielung einer ausreichenden Maschinendynamik sind große Linear-Aktuatoren erforderlich, was wiederum eine große Maschinengrundfläche zur Folge hat. Die beiden Schwenkpunkte reduzieren die Steifigkeit des Fräskopfes, so daß eine Präzisionsbearbeitung nicht möglich ist. Für die Orbitalbewegung der Fräswerkzeuge wird zum Führungssystem hin ausreichend Platz benötigt, wodurch die Spitzenhöhe der Spannfutter relativ groß wird. Dadurch verringert sich bei diesem Maschinenkonzept die Steifigkeit der Spannstöcke enorm. Außerdem ist das Anbringen von Führungsbahnabdeckungen bei dieser Maschine wegen der Orbitalbewegung der Fräsköpfe sowie der Schwenkpunkte der Fräskopfaufhängung nur mit großem Aufwand realisierbar.

Bei der gattungsgemäßen Maschine (US-A-5 078 556) sind zwei Außen-Rundfräswerkzeuge vorgesehen, die jeweils auf einem Führungssystem der Maschine verfahrbar sind. Sie befinden sich auf einander gegenüberliegenden Seiten des zu bearbeitenden Werkstückes.

Der Erfindung liegt die Aufgabe zugrunde, die gattungsgemäße Maschine so auszubilden, daß die Werkstücke mit hoher Bearbeitungsgenauigkeit und bei kompaktem Aufbau einwandfrei bearbeitet werden können.

Diese Aufgabe wird bei der gattungsgemäßen Maschinen erfindungsgemäß mit den kennzeichnenden Merkmalen des Anspruches 1 gelöst.

Bei der erfindungsgemäßen Maschine ist das Werkzeug am Schlittenteil des Kreuzschlittens gehalten. Er wird längs des zugehörigen Führungssystems bewegt, während das Schlittenteil mit dem Werkzeug quer zu diesem Führungssystem bewegbar ist. Vorteilhaft hat die erfindungsgemäße Maschine zwei Spannstöcke und gegebenenfalls Lünetten. Für die Werkzeugseite sowie die Werkstückseite sind die beiden parallelen Führungssysteme vorgesehen, die sich in Z-Richtung erstrecken. Das eine Führungssystem ist für den Kreuzschlitten mit dem Schlittenteil vorgesehen, während das andere Führungssystem den Spannstöcken sowie gegebenenfalls der Lünette zugeordnet ist. Das Werkzeug kann mit dem Schlittenteil quer zur Werkstückachse verfahren werden. Die zu bearbeitenden Werkstücke, insbesondere die Kurbel- und Nockenwellen, sind in Spannfuttern drehbeweglich (C-Achse) eingespannt. Die Erzeugung der kreiszylindrischen Lagerstellen erfolgt durch Achsinterpolation zwischen dem Schlittenteil und der C-Achse. Durch die separaten Führungssysteme für den Kreuzschlitten und die Spannstöcke/Lünetten kann die Führungsbasis jeder einzelnen Baugruppe ausreichend groß dimensioniert werden, wodurch sich eine hohe Verdreh- und Biegesteifigkeit ergibt. Aufgrund der separaten Führungssysteme können die Spannstöcke bei der erfindungsgemäßen Maschine mit geringer Spannfutterauskragung gebaut werden, so daß das Werkstück mit sehr hoher Steifigkeit eingespannt werden kann. Diese Ausbildung am Kreuzschlitten und an den Spannstöcken/Lünette führt zu einer hohen Bearbeitungsgenauigkeit. Außerdem wird die Schwingungs- und Ratterneigung verringert. Dadurch ergeben sich Vorteile, wie höhere Bearbeitungsgenauigkeit, hohe Prozeßsicherheit, hohe Werkzeugstandzeit und hohe Zerspanleistung und dergleichen.

Aufgrund der separaten Führungssysteme ist es vorteilhaft möglich, Führungsbahnabdeckungen anzubringen, die zuverlässig das Eindringen von Spänen verhindern und dennoch konstruktiv einfach ausgeführt sind. Der Verschleiß von Führungsbahnabstreifern wird stark reduziert und die Führungsbahnen selbst sind nicht mehr den mit hoher Geschwindigkeit auftreffenden Spänen ausgesetzt. Dadurch wird die Zuverlässigkeit und damit die Maschinenverfügbarkeit erhöht. Außerdem wird die Temperaturkonstanz gesteigert, weil die Späne nicht mehr die Führungsbahnen erwärmen können. Bei einer Großserienfertigung wird in der Folge eine hohe Prozeßfähigkeit erreicht. Aufgrund der Führungsbahnabdeckungen können nunmehr wälzgelagerte Führungssysteme eingesetzt werden. Die Wälzlagerungen sind gegenüber Gleitführungen empfindlich gegen das Eindringen von Partikeln, wie Spänen, weisen aber eine Reihe von Vorteilen auf. Sie sind einfach und schnell zu montieren, haben einen geringen Gleitwiderstand und ermöglichen hohe Eilganggeschwindigkeiten bei geringer Erwärmung. Im Vergleich zu Gleitführungen tritt kein Stick-Slip-Effekt auf. Die Genauigkeit ist durch die Lagervorspannung sehr hoch. Außerdem wird infolge der Anordnung der Fräseinheit auf einem separaten Führungssystem die Zugänglichkeit in den Arbeitsraum der Maschine wesentlich verbessert.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer Darstellung schräg von oben eine erfindungsgemäße Werkzeugmaschine zum Innen-Rundfräsen von Werkstücken,
- Fig. 2: eine Ansicht in Richtung des Pfeiles 11 in Fig. 1,
- Fig. 3: die erfindungsgemäße Werkzeugmaschine von vorn.

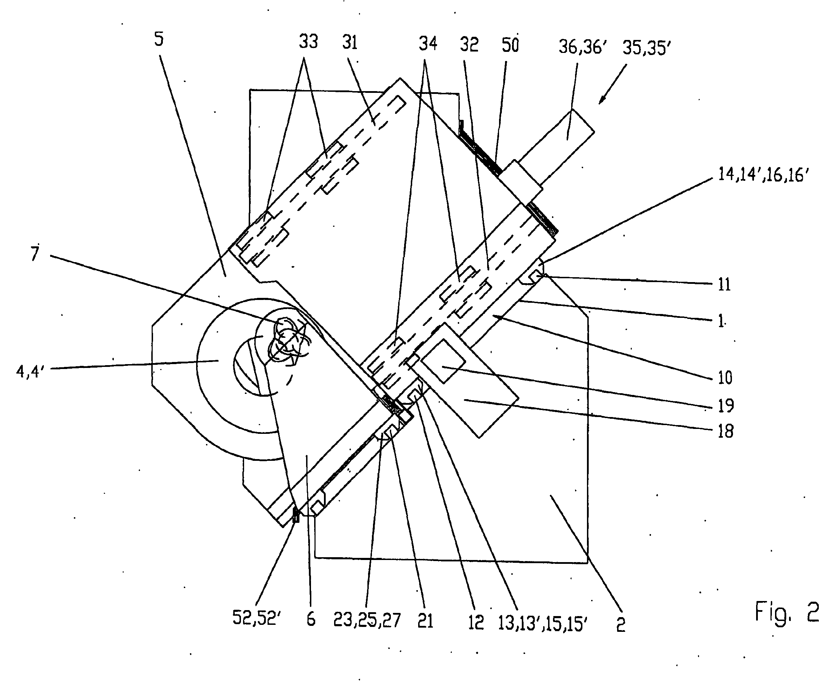

Die Werkzeugmaschine zum Innen-Rundfräsen von Werkstücken hat ein Maschinengestell 2, das mit einer geneigten Auflageseite 1 (Fig. 2) versehen ist. Auf dem Maschinengestell 2 sind zwei Kreuzschlitten 3, 3' verschiebbar gelagert. Sie liegen mit Abstand einander auf gleicher Höhe gegenüber. Die beiden Kreuzschlitten 3, 3' tragen jeweils eine Fräseinheit 5, 5'. Im Bereich neben den Kreuzschlitten 3, 3' sind auf dem Maschinengestell 2 zwei Spannstöcke 6, 6' zum Einspannen des zu bearbeitenden Werkstückes 7 sowie eine Lünette 40 vorgesehen, die sich im Bereich zwischen den Spannstöcken 6, 6' befindet und mit der in bekannter Weise das Werkstück 7 bei der Bearbeitung abgestützt wird. Das Maschinengestell 2 ist in Schrägbettbauweise ausgebildet und kann als Stahl-, Guß- oder auch als Betonkonstruktion ausgeführt werden. Auf der Schrägseite 1 ist im oberen Bereich ein Führungssystem 10 vorgesehen, das als Gleitführung, vorzugsweise aber als Wälzlagerführung ausgebildet ist. Das Führungssystem 10 hat zwei parallel zueinander liegende Führungsschienen 11, 12, die auf der Schrägseite 1 befestigt und auf denen Führungsschuhe 13 bis 16, 13' bis 16' gelagert sind. Die Führungsschuhe sind an den Kreuzschlitten 3, 3' befestigt, die über die Führungsschuhe auf den beiden Führungsschienen 11, 12 verschiebbar gelagert sind. Jeder Kreuzschlitten 3, 3' ist mit jeweils zwei mit Abstand hintereinander liegenden Führungsschuhen 14, 16; 13, 15; 14', 16'; 13', 15' auf den Führungsschienen 11, 12 gelagert. Dadurch werden die Kreuzschlitten 3, 3' zuverlässig auf den Führungsschienen 11, 12 abgestützt. Die Führungsschuhe 13 bis 16, 13' bis 16' sind in bekannter Weise ausgebildet.

Die Kreuzschlitten 3, 3' tragen die Fräseinheiten 5, 5', die quer zur Verfahrrichtung der Kreuzschlitten 3, 3' an diesen verschiebbar gelagert sind. Die Kreuzschlitten 3, 3' sind in W-Richtung bzw. Z-Richtung längs der Führungsschienen 11, 12 getrennt voneinander verfahrbar. Da die beiden Kreuzschlitten 3, 3' über jeweils vier Führungsschuhe 13 bis 16, 13' bis 16' in Verschieberichtung W bzw. Z sowie quer hierzu mit großem Abstand voneinander an der Unterseite versehen sind, wird eine Führungsbasis geschaffen, die sehr biege- und torsionssteif ist. Dadurch sind die Voraussetzungen zu einer präzisen Bearbeitung des Werkstückes 7 geschaffen. Zur Erhöhung der Steifigkeit können weitere Führungsschuhe in der Unterseite der Kreuzschlitten 3, 3' vorgesehen sein. So kann beispielsweise jeder Kreuzschlitten 3, 3' sechs Führungsschuhe aufweisen.

Zum Antrieb der Kreuzschlitten 3, 3' in W- und in Z-Richtung sind Antriebe 18, 18' vorgesehen, die an den voneinander abgewandten Stirnseiten 2a, 2b des Maschinengestelles 2 vorgesehen sind. Die Antriebe 18, 18' haben Antriebsmotoren 19, 19'. Die Kraftübertragung erfolgt in bekannter Weise über (nicht dargestellte) Kugelgewindetriebe.

Als Antriebe für die Kreuzschlitten 3, 3' in W- und in Z-Richtung können auch Linearmotoren eingesetzt werden.

Die Kreuzschlitten 3, 3' sind an ihren einander zugewandten Seiten mit jeweils einem Führungssystem 30, 30' versehen, mit dem die Fräseinheiten 5, 5' quer zur W- bzw. Z-Richtung an den Kreuzschlitten 3, 3' verfahrbar angeordnet sind. Die Führungssysteme 30, 30' haben jeweils zwei parallel zueinander liegende Führungsschienen 31, 32; 31', 32', die mit Abstand übereinander liegen und entsprechend der Auflageseite 1 des Maschinengestelles 2 schräg verlaufen (Fig. 2). Auf den Führungsschienen 31, 32; 31', 32' sitzen die Fräseinheiten 5, 5' mit jeweils zwei Führungsschuhen 33, 34; 33', 34'. Wie Fig. 2 zeigt, liegen die jeder Führungsschiene 31, 32; 31' 32' zugeordneten Führungsschuhe mit Abstand voneinander.

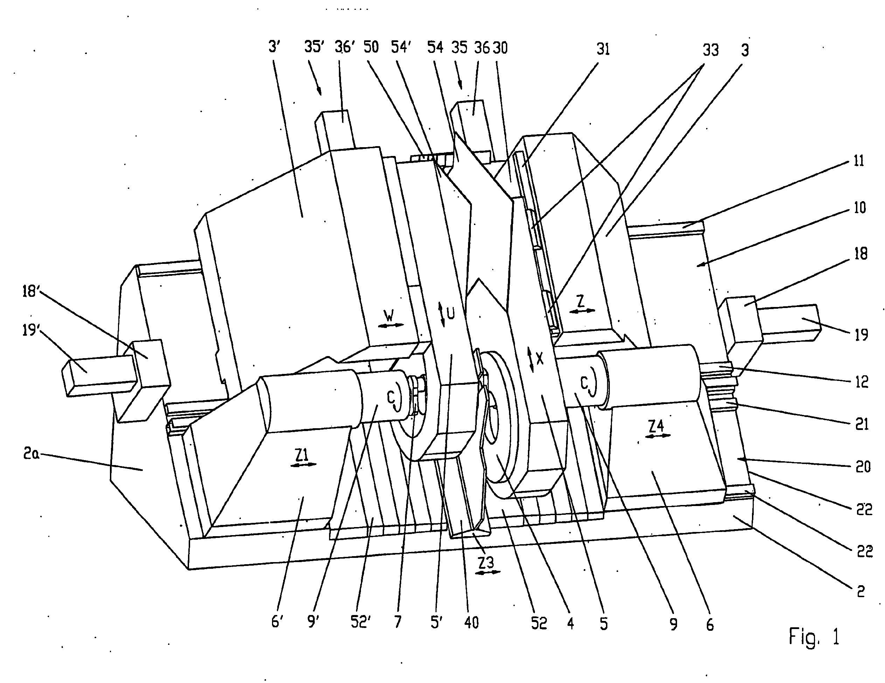

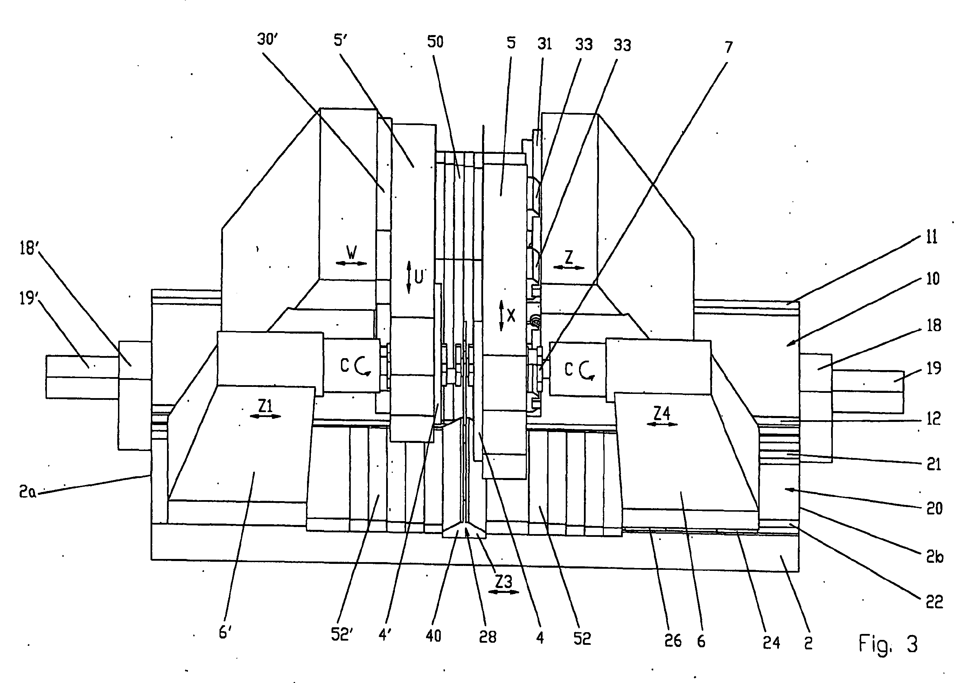

Zum Antrieb der Fräseinheiten 5, 5' sind Antriebe 35, 35' mit Antriebsmotoren 36, 36' vorgesehen. Die Antriebe mit den Antriebsmotoren sind an der von den Spannstöcken 6, 6' abgewandten Seite der Kreuzschlitten 3, 3' vorgesehen (Fig. 1 und 3). Die Antriebsverbindung zu den Fräseinheiten 5, 5' erfolgt in bekannter Weise über (nicht dargestellte) Kugelgewindetriebe. Alternativ können auch Vorschubantriebe mit Linearmotoren eingesetzt werden. Solche Linearmotoren haben im Vergleich zu Antrieben mit Kugelgewindetrieben eine höhere Dynamik und sind verschleißfrei. Die höhere Dynamik ermöglicht insbesondere schnelle In-Prozeß-Maßkorrekturen, bei denen Maßabweichungen, die während der Bearbeitung des Werkstückes 7 gemessen werden, entsprechende Korrekturbewegungen der Vorschubachsen X bzw. U oder C bewirken. Die Fräseinheiten 5, 5' können mittels der Antriebe 35, 35' längs der Führungsschienen 31, 32; 31', 32' in U- sowie in X-Richtung (Fig. 1) verschoben werden.

An dem den Spannstöcken 6, 6' zugewandten Ende der Fräseinheiten 5, 5' befinden sich Innen-Rundfräswerkzeuge 4, 4'. Sie werden in herkömmlicher Weise über extern angebrachte Motoren und Getriebe drehbar angetrieben. Anstelle eines solchen Antriebes kann auch ein Direktantrieb für die Werkzeuge 4, 4' eingesetzt werden, zum Beispiel ein Hohlwellenmotor oder ein Torquemotor. Ein derartiger Antrieb benötigt nur geringen Bauraum, weil der bei konventionellen Antrieben erforderliche externe Motor und das Getriebe entfallen. Die Direktantriebe weisen darüber hinaus eine hohe Dynamik auf, weshalb die hochdynamische Schwingungsanregung bei der Zerspanung des Werkstückes 7 direkt an der Krafteinleitungsstelle ausgeregelt werden kann. Mit hoher Genauigkeit kann durch Messung der abgegebenen Motorleistung der Verschleißzustand der Schneidkanten der Werkzeuge 4, 4' ermittelt werden. Die Messung des Motorstromes wird dabei im Gegensatz zu herkömmlichen Antrieben nicht durch Verlustleistungen eines Getriebes verfälscht. Durch die Messung der Zerspanleistung über den Motorstrom kann auch eine Anpassung der Vorschubgeschwindigkeit und/oder der Schnittgeschwindigkeit im Sinne einer adaptiven Regelung erfolgen, so daß die Zerspanung immer unter optimalen Schnittbedingungen abläuft. Insbesondere die Schnittgeschwindigkeit kann mit Hilfe des Direktantriebes aufgrund des geringen Massenträgheitsmomentes während der Bearbeitung sehr schnell geändert werden. So ist beispielsweise eine Verdoppelung der Schnittgeschwindigkeit innerhalb von 0,5 s möglich. Der Lauf des Fräswerkzeuges 4, 4' erfolgt aufgrund des fehlenden Getriebes bei Direktantrieben sehr schwingungsarm, wodurch eine hohe Oberflächenqualität erzielt und die Standzeit der Werkzeuge verbessert werden kann. Die Fräswerkzeuge 4, 4' werden drehbar angetrieben.

Durch die hohe Steifigkeit des Kreuzschlittens 3, 3' sowie der Fräseinheiten 5, 5' ist es möglich, Satzfräser einzusetzen. Mit diesen Werkzeugen werden mehrere Lagerstellen von Kurbel- oder Nockenwellen oder Nocken von Nokkenwellen mit einer Fräseinheit gleichzeitig bearbeitet.

Das Führungssystem 10 für die Kreuzschlitten 3, 3' befindet sich im oberen Bereich der Schrägseite 1 des Maschinengestelles 2. Im unteren Bereich der Schrägseite 1 des Maschinengestelles 2 befindet sich ein weiteres Führungssystem 20, das zwei parallel zueinander liegende Führungsschienen 21, 22 aufweist, die parallel zu den Führungsschienen 11, 12 des Führungssystems 10 liegen. Im Unterschied zum Führungssystem 10, dessen Führungsschienen 11, 12 sich über die ganze Länge des Maschinengestelles 2 erstrecken, verlaufen die Führungsschienen 21, 22 des Führungssystems 20 nur über einen Teil der Länge des Maschinengestelles 2. Dadurch ist im Ausführungsbeispiel lediglich der Spannstock 6 längs des Führungssystems 20 in Richtung der Z4-Achse verschiebbar. Der gegenüberliegende Spannstock 6' ist in diesem Fall ortsfest auf dem Maschinengestell 2 angeordnet. Dementsprechend kann dieser Spannstock 6' in Richtung der Z1-Achse nicht bewegt werden. Es ist selbstverständlich möglich, nur den Spannstock 6' verschiebbar auszubilden und dafür den Spannstock 6 auf dem Maschinengestell 2 zu befestigen. In diesem Falle ist das Führungssystem 20 im Bereich des Spannstockes 6' vorgesehen.

Schließlich ist es möglich, auch das Führungssystem 20 über die gesamte Länge des Maschinengestelles 2 vorzusehen. In diesem Falle können beide Spannstöcke 6, 6' in Richtung ihrer jeweiligen Z1- bzw. Z4-Achse auf dem Maschinengestell 2 verstellt werden.

Im dargestellten Ausführungsbeispiel, bei dem lediglich der Spannstock 6 verschiebbar ist, sind an der Unterseite des Spannstockes 6 vier Führungsschuhe 23 bis 26 befestigt, mit denen der Spannstock 6 auf den Führungsschienen 21, 22 sitzt. Auf jeder Führungsschiene 21, 22 ist der Spannstock 6 mit jeweils zwei mit Abstand voneinander liegenden Führungsschuhen 23, 25; 24, 26 gelagert. Der Antrieb des Spannstockes 6 in Z4-Richtung erfolgt über einen (nicht dargestellten) Kugelgewindetrieb oder durch einen hydraulischen Antrieb. Der Spannstock 6 kann auch so ausgebildet sein, daß er von der Lünette 40 mitgeschleppt wird. Sie ist auf den beiden Führungsschienen 21, 22 mit jeweils einem Führungsschuh 27, 28 gelagert. Der Antrieb der Lünette 40 erfolgt in diesem Fall ebenfalls vorteilhaft mit einem (nicht dargestellten) Kugelgewindetrieb. Wird der Spannstock 6 von der Lünette 40 mitgeschleppt, ist der Spannstock 6 mit Klemmschuhen versehen, die bei Erreichen einer Soll-Position durch Klemmwirkung auf die Führungsschienen 21, 22 selbst während der Bearbeitung des Werkstückes 7 eine sichere Arretierung gewährleisten.

Aufgabe der Lünette 40 ist es, die Werkstückachse während der Bearbeitung in ihrer Soll-Position zu halten. Durch Bearbeitungskräfte und/oder durch das Freiwerden von Eigenspannungen würde eine Verlagerung der Werkstückachse erfolgen, wenn keine Lünette eingesetzt wird. Zwei Einsatzfälle können unterschieden werden:
- Lünetten, die das Werkstück auf bereits bearbeiteten Flächen abstützen, benötigen keine Ausgleichselemente.
- Lünetten, die das Werkstück auf einer Rohkontur abstützen, benötigen Ausgleichselemente, d.h. die Stützelemente sind so beweglich angeordnet, daß sie unregelmäßigen Werkstückkonturen ausweichen können.

Da die vier Führungsschuhe 23 bis 26 an der Unterseite des Spannstockes 6 mit großem Abstand in Verschieberichtung (Z4-Achse) und quer hierzu angeordnet sind, weist er eine stabile Führungsbasis mit einer hohen Biegeund Torsionssteifigkeit auf. Dadurch ist eine optimale Präzisionsbearbeitung des Werkstückes 7 möglich.

Die beiden Spannstöcke 6, 6' sind an ihren einander zugewandten Seiten jeweils mit einem Spannfutter 9, 9' versehen, mit denen das Werkstück 7 während der Bearbeitung eingespannt wird. Die Spannfutter 9, 9' sind drehbar und bilden die numerisch gesteuerte Achse C.

Das Werkstück 7, beispielsweise eine Kurbel- oder eine Nockenwelle, wird an seinen beiden Enden in den Spannfuttern 9, 9' fest eingespannt. Die Bearbeitung der kreiszylindrischen Lagerstellen des Werkstückes 7 mittels der Innen-Rundfräser 4, 4' erfolgt durch eine Achsinterpolation der linearen Achsen X bzw. U (Fig. 1) mit der Achse C.

Da die Kreuzschlitten 3, 3' auf separaten Führungsbahnen geführt werden, kann der Überstand der Spannstöcke 6, 6' gering gehalten werden. Dadurch erhalten die Spannstöcke 6, 6' eine hohe Steifigkeit.

Die Lünette 40 wird vorteilhaft dann eingesetzt, wenn das zu bearbeitende Werkstück lang und damit labil ist. Die Lünette 40 kann längs des Führungssystems 20 mittels ihrer beiden Führungsschuhe 27, 28 durch einen (nicht dargestellten) Kurbelgewindetrieb in die erforderliche Lage verschoben werden. Zur Erhöhung der Steifigkeit der Lünette 40 können weitere Führungsschuhe eingesetzt werden. So kann die Lünette 40 beispielsweise mit drei oder vier Führungsschuhen auf den Führungsschienen 21, 22 abgestützt sein. Bei besonders langen oder labilen Werkstücken 7 können weitere Lünetten vorgesehen sein. Sie können baugleich mit der Lünette 40 ausgebildet sein. Infolge des ausreichenden Platzes zwischen den Kreuzschlitten 3, 3' ist es auch möglich, Werkstückabstützungen einzusetzen, die mit den Kreuzschlitten 3, 3' fest verbunden sind.

Besonders vorteilhaft ist es, wenn die Führungssysteme 10, 30 als Wälzlagerführung und das Führungssystem 20 als Gleitführung ausgebildet sind. Aufgrund der geringen Bewegungshäufigkeit der Spannstöcke 6, 6' und der Lünette 40 entsteht auch bei Verwendung von Gleitführungen nur eine geringe Reibungswärme. Selbstverständlich sind alle Kombinationen von Wälzoder Gleitlagerführungen an den Führungssystemen 10, 20, 30 möglich. Bei Gleitführungen sind insbesondere die Materialpaarungen Stahl/Guß, Stahl/Kunststoff oder Guß/Kunststoff geeignet, um hohe Genauigkeiten, hohe Lebensdauern und geringe Stick-Slip-Effekte zu erzielen. Diese Führungen basieren auf dem hydrodynamischen Prinzip. Eine weitere vorteilhafte Ausbildung der Gleitlager stellt die Verwendung hydrostatischer Lagerungen dar. Besonders vorteilhaft ist dabei die geringe Reibung sowie kein Auftreten des Stick-Slip-Effektes.

Zum Schutz der Führungssysteme 10, 20, 30 vor Eindringen von Spänen und Kühlschmierstoffen sind Führungsbahnabdeckungen 50, 52, 52', 54, 54' vorgesehen. Da zwischen den auf den Führungssystemen 10, 20, 30 aufgesetzten Baugruppen ausreichend Platz vorhanden ist, können die Abdeckungen vorteilhaft als Teleskopabdeckungen ausgebildet sein. Infolge der Abdeckungen 50, 52, 52', 54, 54' ist es möglich, Energiezuführungen zu den Baugruppen auf einfache Weise zwischen den Führungsschienen 11, 12; 21, 22 und unterhalb der Abdeckungen vorzusehen. Auf diese Weise kann die Lünette 40 mit Elektrizität, Hydraulik, Pneumatik und dergleichen ohne Einbringung von Hohlräumen in das Maschinengestell 2 versorgt werden. Der Querschnitt des Maschinengestelles 2 muß dann nicht geschwächt werden, was sich vorteilhaft auf die Steifigkeit der gesamten Werkzeugmaschine auswirkt. Die Verlegung der Energiezuführung ist zudem sehr einfach möglich.

Bei der Werkzeugmaschine gemäß dem dargestellten Ausführungsbeispiel ist das Maschinengestell 2 in Schrägbettausführung ausgebildet. Selbstverständlich kann das Maschinengestell 2 auch eine andere Form haben. So kann die Auflageseite 1 beispielsweise horizontal angeordnet sein.

## Patentansprüche

1. Maschine zur Bearbeitung von Werkstücken (7), insbesondere von Kurbel- und Nockenwellen, mit mindestens einem Rundfräswerkzeug (4, 4'), das an einem Schlittenteil (5, 5') eines Kreuzschlittens (3, 3') gehalten ist, der längs und das Schlittenteil (5, 5') quer zu einem von zwei parallelen Führungssystemen (10, 20) bewegbar ist, **dadurch gekennzeichnet, dass** das Werkzeug (4, 4') ein Innen-Rundfräswerkzeug ist, und dass auf dem Führungssystem (10) zwei Kreuzschlitten (3, 3') gelagert sind, die längs des Führungssystems (10) unabhängig voneinander verschiebbar sind.

2. Maschine nach Anspruch 1,
**dadurch gekennzeichnet, daß** die Führungssysteme (10, 20) Gleitführungen aufweisen.

3. Maschine nach Anspruch 1,
**dadurch gekennzeichnet, daß** die Führungssysteme (10, 20) Wälzlagerführungen aufweisen.

4. Maschine nach einem der Ansprüche 1 bis 3,
**dadurch gekennzeichnet, daß** das Schlittenteil (5, 5') auf einem Führungssystem (30, 30') des Kreuzschlittens (3, 3') geführt ist.

5. Maschine nach einem der Ansprüche 1 bis 4,
**dadurch gekennzeichnet, daß** das Schlittenteil (4, 4') eine Fräseinheit ist.

6. Maschine nach einem der Ansprüche 1 bis 5,
**dadurch gekennzeichnet, daß** auf dem einen Führungssystem (20) im Bereich neben dem Kreuzschlitten (3, 3') wenigstens ein Spannstock (6, 6') und/oder wenigstens eine Lünette (40) gelagert ist.

7. Maschine nach einem der Ansprüche 1 bis 6,
**dadurch gekennzeichnet, daß** die Führungssysteme (10, 20) wenigstens zwei parallel zueinander liegende Führungsschienen (11, 12; 21, 22) aufweisen.

8. Maschine nach Anspruch 7,
**dadurch gekennzeichnet, daß** der Kreuzschlitten (3, 3') mit wenigstens zwei, vorzugsweise jeweils mit Abstand voneinander liegenden Führungsschuhen (13 bis 16; 13' bis 16') auf den Führungsschienen (11, 12) geführt ist.

9. Maschine nach Anspruch 7 oder 8,
**dadurch gekennzeichnet, daß** der Spannstock (6, 6') mit wenigstens einem, vorzugsweise jeweils zwei mit Abstand voneinander liegenden Führungsschuhen (23 bis 26) auf den Führungsschienen (21, 22) geführt ist.

10. Maschine nach einem der Ansprüche 7 bis 9,
**dadurch gekennzeichnet, daß** die Lünette (40) mit wenigstens einem Führungsschuh (27, 28) auf den Führungsschienen (21, 22) geführt ist.

11. Maschine nach einem der Ansprüche 1 bis 10,
**dadurch gekennzeichnet, daß** ein Vorschubantrieb (18, 18') des Kreuzschlittens (3, 3') ein Kugelgewindetrieb ist.

12. Maschine nach einem der Ansprüche 1 bis 10,
**dadurch gekennzeichnet, daß** ein Vorschubantrieb des Kreuzschlittens (3, 3') ein Linearmotorantrieb ist.

13. Maschine nach einem der Ansprüche 1 bis 12,
**dadurch gekennzeichnet, daß** ein Vorschubantrieb des Spannstockes (6, 6') ein Kugelgewindetrieb ist.

14. Maschine nach einem der Ansprüche 1 bis 12,
**dadurch gekennzeichnet, daß** ein Vorschubantrieb des Spannstockes (6, 6') ein hydraulischer Antrieb ist.

15. Maschine nach einem der Ansprüche 1 bis 14,
**dadurch gekennzeichnet, daß** zwei Spannstöcke (6, 6') vorgesehen sind, von denen einer fest auf einem Maschinengestell (2) befestigt ist.

16. Maschine nach einem der Ansprüche 1 bis 15,
**dadurch gekennzeichnet, daß** zwei Spannstöcke (6, 6') auf dem einen Führungssystem (20) gelagert sind.

17. Maschine nach einem der Ansprüche 1 bis 15,
**dadurch gekennzeichnet, daß** zwei vorteilhaft unabhängig voneinander antreibbare Spannstöcke (6, 6') auf dem Maschinengestell (2) befestigt sind.

18. Maschine nach einem der Ansprüche 1 bis 17,
**dadurch gekennzeichnet, daß** der Spannstock (6, 6') ein Spannfutter (9, 9') aufweist, das vorzugsweise um eine C-Achse antreibbar ist.

19. Maschine nach einem der Ansprüche 1 bis 18,
**dadurch gekennzeichnet, daß** jeder Kreuzschlitten (3, 3') ein Führungssystem (30, 30') für jeweils einen Schlittenteil (5, 5') aufweist, die vorteilhaft an einander zugewandten Seiten der Kreuzschlitten (3, 3') vorgesehen sind.

20. Maschine nach einem der Ansprüche 1 bis 19,
**dadurch gekennzeichnet, daß** das Schlittenteil (5, 5') in Richtung auf den Spannstock (6, 6') in seiner Verschieberichtung über den Kreuzschlitten (3, 3') ragt.

21. Maschine nach einem der Ansprüche 1 bis 20,
**dadurch gekennzeichnet, daß** das Schlittenteil (5, 5') am überstehenden Ende das Fräswerkzeug (4, 4') trägt, dessen Antrieb vorzugsweise ein Direktantrieb ist.

22. Maschine nach einem der Ansprüche 1 bis 21,
**dadurch gekennzeichnet, daß** die Führungsschienen (11, 12; 21, 22) der Führungssysteme (10, 20) zumindest teilweise unter einer vorteilhaft als Teleskopabdeckung ausgebildeten Abdeckung (50, 52, 52', 54, 54') liegen.

23. Maschine nach Anspruch 22,
**dadurch gekennzeichnet, daß** unterhalb der Abdeckung (50, 52, 52', 54, 54') vorzugsweise zwischen den Führungsschienen (11, 12; 21, 22) der Führungssysteme (10, 20) verlaufende Energiezuführungen zum Kreuzschlitten (3, 3') und/oder zum Spannstock (5, 5') und/oder zur Lünette (40) verlaufen.

24. Maschine nach einem der Ansprüche 1 bis 23,
**dadurch gekennzeichnet, daß** das Maschinengestell (2) in Schrägbettbauweise ausgebildet ist, und daß vorteilhaft die Führungssysteme (10, 20) auf der Schrägseite (1) des Maschinengestelles (2) angeordnet sind.

## Claims

1. Equipment for machining of workpieces (7), particularly of crankshafts and camshafts, with at least one circular milling tool (4, 4'), which is held on a slide component (5, 5') of a compound slide (3, 3'), which can be moved longitudinally and the slide component (5, 5') transversely to one of two parallel guide systems (10, 20),
**characterised in that** the tool (4, 4') is an internal circular milling tool and that on the guide system (10) two compound slides (3, 3') are mounted, which can be moved longitudinally on the guide system (10) independently of one another.

2. Equipment according to claim 1,
**characterised in that** the guide systems (10, 20) comprise slideways.

3. Equipment according to claim 1,
**characterised in that** the guide systems (10, 20) comprise roller bearing guides.

4. Equipment according to one of the claims 1 to 3,
**characterised in that** the slide component (5, 5') is guided on a guide system (30, 30') of the compound slide (3, 3').

5. Equipment according to one of the claims 1 to 4,
**characterised in that** the slide component (5, 5') is a milling unit.

6. Equipment according to one of the claims 1 to 5,
**characterised in that** on the one guide system (20) in the area next to the compound slide (3, 3'), at least one head stock (6, 6') and/or at least one steady rest (40) is mounted.

7. Equipment according to one of the claims 1 to 6,
**characterised in that** the guide systems (10, 20) comprise at least two guide rails (11, 12; 21, 22), lying parallel to one another.

8. Equipment according to claim 7,
**characterised in that** the compound slide (3, 3') is guided with at least two guide shoes (13 to 16; 13' to 16') being situated preferably respectively with a distance from one another on the guide rails (11, 12).

9. Equipment according to claim 7 or 8,
**characterised in that** the head stock (6, 6') is guided on the guide rails (21, 22) with at least one, preferably two guide shoes (23 to 26), located at a distance from one another,

10. Equipment according to one of the claims 7 to 9,
**characterised in that** the steady rest (40) is guided with at least one guide shoe (27, 28) onto the guide rails (21, 22).

11. Equipment according to one of the claims 1 to 10,
**characterised in that** a feed drive (18, 18') of the cross slide (3, 3') is a ball screw drive.

12. Equipment according to one of the claims 1 to 10,
**characterised in that** a feed drive of the compound slide (3, 3) is a linear motor drive.

13. Equipment according to one of the claims 1 to 12,
**characterised in that** a feed drive of the head stock (6, 6') is a ball screw drive.

14. Equipment according to one of the claims 1 to 12,
**characterised in that** a feed drive of the head stock (6, 6') is a hydraulic drive.

15. Equipment according to one of the claims 1 to 14,
**characterised in that** there are two head stocks (6, 6'), one of which is firmly fixed on a machine frame (2).

16. Equipment according to one of the claims 1 to 15,
**characterised in that** two head stocks (6, 6') are mounted on the one guide system (20).

17. Equipment according to one of the claims 1 to 15,
**characterised in that** two head stocks (6, 6') which preferably can be optimally driven independently from one another, are fixed onto the machine frame (2).

18. Equipment according to one of the claims 1 to 17,
**characterised in that** the head stock (6, 6') comprises a clamping chuck (9, 9'), which preferably can be driven around a C-axis.

19. Equipment according to one of the claims 1 to 18,
**characterised in that** each compound slide (3, 3') comprises a guide system (30, 30') for a slide component (5, 5') each, and which are provided advantageously at sides of the compound slides (3, 3'), facing one another.

20. Equipment according to one of the claims 1 to 19,
**characterised in that** the slide component (5, 5') protrudes in the direction of its displacement in direction onto the head stock (6, 6') over the compound slide (3, 3').

21. Equipment according to one of the claims 1 to 20,
**characterised in that** the slide component (5, 5') holds, at its overhanging end the milling tool (4, 4'), the drive of which preferably is a direct drive.

22. Equipment according to one of the claims 1 to 21,
**characterised in that** the guide rails (11, 12; 21, 22) of the guide systems (10, 20) are located, at least partially under a cover (50, 52, 52', 54, 54'), which advantageously is configured as a telescopic cover.

23. Equipment according to claim 22,
**characterised in that** underneath the cover (50, 52, 52', 54, 54'), preferably between the guide rails (11, 12; 21, 22) of the guide systems (10, 20), power supply lines run to the compound slide (3, 3') and/or to the head stock (6, 6') and/or to the steady rest (40).

24. Equipment according to one of the claims 1 to 23,
**characterised in that** the machine frame (2) is designed in inclined-bed style an that the guide systems (10, 20) are advantageously located on the bevelled side (1) of the machine frame (2).

## Revendications

1. Machine pour l'usinage de pièces d'oeuvre (7), notamment de vilebrequins et d'arbres à cames, comprenant au moins un outil de fraisage circulaire (4, 4') supporté par un élément de chariot (5, 5') d'un chariot à guidages croisés (3, 3'), qui est mobile le long de l'un de deux systèmes de guidage parallèles (10, 20), et l'élément de chariot (5, 5') étant mobile transversalement à ces systèmes de guidage,
**caractérisée en ce que** l'outil (4, 4') est un outil de fraisage circulaire intérieur, et **en ce que** sur le système de guidage (10) sont montés deux chariots à guidages croisés (3, 3'), qui peuvent être déplacés indépendamment l'un de l'autre le long du système de guidage (10).

2. Machine selon la revendication 1,
**caractérisée en ce que** les systèmes de guidage (10, 20) comportent des éléments de guidage lisses.

3. Machine selon la revendication 1,
**caractérisée en ce que** les systèmes de guidage (10, 20) comportent des éléments de guidage à roulement.

4. Machine selon l'une des revendications 1 à 3,
**caractérisée en ce que** l'élément de chariot (5, 5') est guidé sur un système de guidage (30, 30') du chariot à guidages croisées (3, 3').

5. Machine selon l'une des revendications 1 à 4,
**caractérisée en ce que** l'élément de chariot (5, 5') est une unité de fraisage.

6. Machine selon l'une des revendications 1 à 5,
**caractérisée en ce que** sur ledit un système de guidage (20), dans la zone située à côté du chariot à guidages croisés (3, 3'), est montée ou sont montées au moins une poupée de serrage (6, 6') et/ou au moins une lunette (40).

7. Machine selon l'une des revendications 1 à 6,
**caractérisée en ce que** les systèmes de guidage (10, 20) comportent au moins deux glissières de guidage (11, 12 ; 21, 22) mutuellement parallèles.

8. Machine selon la revendication 7,
**caractérisée en ce que** le chariot à guidages croisés (3, 3') est guidé sur les glissières de guidage (11, 12) à l'aide d'au moins deux coussinets de guidage (13 à 16 ; 13' à 16') de préférence respectivement espacés mutuellement.

9. Machine selon la revendication 7 ou la revendication 8,
**caractérisée en ce que** la poupée de serrage (6, 6') est guidée sur les glissières de guidage (21, 22) à l'aide d'au moins un, de préférence respectivement de deux coussinets de guidage (23 à 26) espacés mutuellement.

10. Machine selon l'une des revendications 7 à 9,
**caractérisée en ce que** la lunette (40) est guidée sur les glissières de guidage (21, 22) à l'aide d'au moins un coussinet de guidage (27, 28).

11. Machine selon l'une des revendications 1 à 10,
**caractérisée en ce qu'**un entraînement d'avance (18, 18') du chariot à guidages croisés (3, 3') est un entraînement à transmission à vis à billes.

12. Machine selon l'une des revendications 1 à 10,
**caractérisée en ce qu'**un entraînement d'avance du chariot à guidages croisés (3, 3') est un entraînement à moteur linéaire.

13. Machine selon l'une des revendications 1 à 12,
**caractérisée en ce qu'**un entraînement d'avance de la poupée de serrage (6, 6') est un entraînement à transmission à vis à billes.

14. Machine selon l'une des revendications 1 à 12,
**caractérisée en ce qu'**un entraînement d'avance de la poupée de serrage (6, 6') est un entraînement hydraulique.

15. Machine selon l'une des revendications 1 à 14,
**caractérisée en ce que** sont prévues deux poupées de serrage (6, 6') dont l'une est fixée sur un bâti de machine (2) de manière fixe.

16. Machine selon l'une des revendications 1 à 15,
**caractérisée en ce que** deux poupées de serrage (6, 6') sont prévues sur ledit système de guidage (20).

17. Machine selon l'une des revendications 1 à 15,
**caractérisée en ce que** deux poupées de serrage (6, 6') pouvant avantageusement être entraînées indépendamment l'une de l'autre, sont fixées sur le bâti de machine (2).

18. Machine selon l'une des revendications 1 à 17
**caractérisée en ce que** la poupée de serrage (6, 6') comprend un mandrin de serrage (9, 9'), qui de préférence peut être entraîné autour d'un axe C.

19. Machine selon l'une des revendications 1 à 18,
**caractérisée en ce que** chaque chariot à guidages croisés (3, 3') présente un système de guidage (30, 30') pour respectivement un élément de chariot (5, 5'), ceux-ci se trouvant avantageusement sur des côtés dirigés l'un vers l'autre des chariots à guidages croisés (3, 3').

20. Machine selon l'une des revendications 1 à 19,
**caractérisée en ce que** l'élément de chariot (5, 5') fait saillie, dans sa direction de déplacement en translation en direction de la poupée de serrage (6, 6'), au-delà du chariot à guidages croisés (3, 3').

21. Machine selon l'une des revendications 1 à 20,
**caractérisée en ce que** l'élément de chariot (5, 5') porte à son extrémité en saillie, l'outil de fraisage (4, 4') dont l'entraînement est de préférence un entraînement direct.

22. Machine selon l'une des revendications 1 à 21,
**caractérisée en ce que** les glissières de guidage (11, 12 ; 21, 22) des systèmes de guidage (10, 20) se situent au moins en partie sous un élément de capotage de recouvrement (50, 52, 52', 54, 54') avantageusement réalisé sous forme d'élément de capotage de recouvrement télescopique.

23. Machine selon la revendication 22,
**caractérisée en ce que** sous l'élément de capotage de recouvrement (50, 52, 52', 54, 54'), des éléments d'alimentation en énergie mènent vers le chariot à guidages croisés (3, 3') et/ou vers la poupée de serrage (6, 6') et/ou vers la lunette (40), en s'étendant de préférence entre les glissières de guidage (11, 12 ; 21, 22) des systèmes de guidage (10, 20).

24. Machine selon l'une des revendications 1 à 23,
**caractérisée en ce que** le bâti de machine (2) est d'une configuration à banc incliné, et **en ce que** les systèmes de guidage (10, 20) sont avantageusement agencés sur le côté incliné (1) du bâti de machine (2).
